# EUROPEAN PATENT APPLICATION

(11) **EP 4 521 497 A1**
(43) Date of publication of application: **12.03.2025**
(21) Application number: 23819994.7
(22) Date of filing: 04.05.2023
(51) Int. Cl.: H01M 8/04119

(54) **MID-CASE OF HUMIDIFIER FOR FUEL CELL AND HUMIDIFIER FOR FUEL CELL**

(30) Priority: 10.06.2022 KR 20220070466
(71) Applicant: Kolon Industries, Inc., Seoul 07793 (KR)
(72) Inventor: AHN, Woong Jeon, Seoul 07793 (KR); HER, Jung Kun, Seoul 07793 (KR); YANG, Hyoung Mo, Seoul 07793 (KR); KI, Sung Kwan, Seoul 07793 (KR)
(74) Representative: Vossius & Partner Patentanwälte Rechtsanwälte mbB
(86) International application number: PCT/KR2023/006088
(87) International publication number: WO 2023/239058

(57) **Abstract**

The present invention relates to a mid-case of a humidifier for a fuel cell and a humidifier for a fuel cell, comprising: a mid-body that accommodates at least one cartridge including a plurality of hollow fiber membranes; a partition wall part disposed inside the mid-body and partitioning the inside of the mid-body into an inflow space into which a first gas flows and an outflow space through which the first gas flows out; and a bypass hole formed through the partition wall part such that a portion of the first gas introduced into the inflow space bypasses the cartridge and flows into the outflow space.

## Description

### [TECHNICAL FIELD]

The present disclosure relates to a humidifier for fuel cells configured to supply humidified gas to a fuel cell.

### [Background Art]

A fuel cell has advantages in that it is possible to continuously generate electricity as long as hydrogen and oxygen are supplied, unlike a general chemical cell, such as a dry cell or a storage cell, and in that there is no heat loss, whereby efficiency of the fuel cell is about twice as high as efficiency of an internal combustion engine.

In addition, the fuel cell directly converts chemical energy generated by combination of hydrogen and oxygen into electrical energy, whereby the amount of contaminants that are discharged is small. Consequently, the fuel cell has advantages in that the fuel cell is environmentally friendly and in that a concern about depletion of resources due to an increase in energy consumption can be reduced.

Based on the kind of an electrolyte that is used, such a fuel cell may generally be classified as a polymer electrolyte membrane fuel cell (PEMFC), a phosphoric acid fuel cell (PAFC), a molten carbonate fuel cell (MCFC), a solid oxide fuel cell (SOFC), or an alkaline fuel cell (AFC) .

These fuel cells are operated fundamentally by the same principle, but are different from each other in terms of the kind of fuel that is used, operating temperature, catalyst, and electrolyte. Among these fuel cells, the polymer electrolyte membrane fuel cell (PEMFC) is known as being the most favorable to a transportation system as well as small-scale stationary power generation equipment, since the polymer electrolyte membrane fuel cell is operated at a lower temperature than the other fuel cells and the output density of the polymer electrolyte membrane fuel cell is high, whereby it is possible to miniaturize the polymer electrolyte membrane fuel cell.

One of the most important factors in improving the performance of the polymer electrolyte membrane fuel cell (PEMFC) is to supply a predetermined amount or more of moisture to a polymer electrolyte membrane or a proton exchange membrane (PEM) of a membrane electrode assembly (MEA) in order to retain moisture content. The reason for this is that, if the polymer electrolyte membrane or the proton exchange membrane is dried, power generation efficiency is abruptly reduced.
1) A bubbler humidification method of filling a pressure-resistant container with water and allowing a target gas to pass through a diffuser in order to supply moisture, 2) a direct injection method of calculating the amount of moisture to be supplied that is necessary for fuel cell reaction and directly supplying moisture to a gas stream pipe through a solenoid valve, and 3) a membrane humidification method of supplying moisture to a gas fluid bed using a polymer separation membrane are used as methods of humidifying the polymer electrolyte membrane or the proton exchange membrane.

Among these methods, the membrane humidification method, which provides water vapor to air that is supplied to the polymer electrolyte membrane or the proton exchange membrane using a membrane configured to selectively transmit only water vapor included in off-gas in order to humidify the polymer electrolyte membrane or the proton exchange membrane, is advantageous in that it is possible to reduce the weight and size of a humidifier.

When a module is formed, a hollow fiber membrane having large transmission area per unit volume is suitable for a permselective membrane used in the membrane humidification method. That is, when a humidifier is manufactured using a hollow fiber membrane, high integration of the hollow fiber membrane having large contact surface area is possible, whereby it is possible to sufficiently humidify the fuel cell even at a small capacity, it is possible to use a low-priced material, and it is possible to collect moisture and heat included in off-gas discharged from the fuel cell at a high temperature and to reuse the collected moisture and heat through the humidifier.

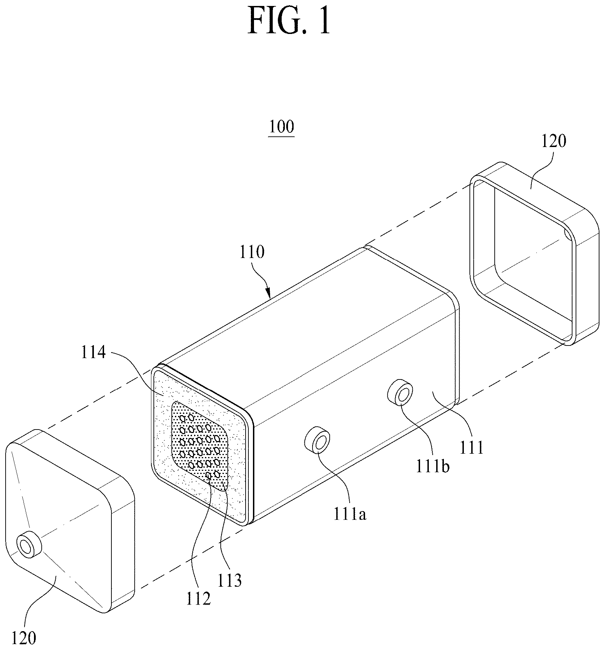

FIG. 1 is a schematic exploded perspective view of a conventional humidifier for fuel cells.

As illustrated in FIG. 1, a conventional membrane humidification type humidifier 100 includes a humidifying module 110, in which moisture exchange is performed between air supplied from the outside and off-gas discharged from a fuel cell stack (not shown), and caps 120 coupled respectively to opposite ends of the humidifying module 110.

One of the caps 120 transmits air supplied from the outside to the humidifying module 110, and the other cap transmits air humidified by the humidifying module 110 to the fuel cell stack.

The humidifying module 110 includes a mid-case 111 having an off-gas inlet 111a and an off-gas outlet 111b and a plurality of hollow fiber membranes 112 in the mid-case 111. Opposite ends of the hollow fiber membranes 112 are potted in fixing layers 113. In general, each of the fixing layers 113 is formed by hardening a liquid polymer, such as liquid polyurethane resin, using a casting method. The fixing layers 113, in which ends of the hollow fiber membranes 112 are potted, and resin layers 114 provided between the fixing layers 113 and the mid-case 111 isolate the inner spaces of the caps 120 from the inner space of the mid-case 111. Similarly to the fixing layers 113, each of the resin layers 114 is generally formed by hardening a liquid polymer, such as liquid polyurethane resin, using a casting method.

Air supplied from the outside flows along hollows of the hollow fiber membranes 112. Off-gas introduced into the mid-case 111 through the off-gas inlet 111a comes into contact with outer surfaces of the hollow fiber membranes 112, and is discharged from the mid-case 111 through the off-gas outlet 111b. When the off-gas comes into contact with the outer surfaces of the hollow fiber membranes 112, moisture contained in the off-gas is transmitted through the hollow fiber membranes 112 to humidify air flowing along the hollows of the hollow fiber membranes 112.

In this case, conventionally, shell differential pressure corresponding to the internal pressure of the mid-case 111 may increase while the off-gas is introduced into the mid-case 111 and is then discharged from the mid-case 111. Such an increase in the shell differential pressure may cause a decrease in the efficiency of a fuel cell system, such as an increase in power consumption. This problem is exacerbated by the miniaturization of the humidifier for fuel cells.

### [Disclosure]

### [Technical Problem]

The present disclosure has been made in view of the above problems, and it is an object of the present disclosure to provide a mid-case of a humidifier for fuel cells and a humidifier for fuel cells capable of reducing shell differential pressure.

### [Technical Solution]

In order to accomplish the above object, the present disclosure may include the following constructions.

A mid-case of a humidifier for fuel cells according to the present disclosure is provided in a humidifier for fuel cells, the humidifier including a humidifying module configured to humidify dry gas to be supplied to a fuel cell stack using wet gas, a first cap coupled to one end of the humidifying module, and a second cap coupled to the other end of the humidifying module, and may include a mid body configured to receive at least one cartridge including a plurality of hollow fiber membranes, a bulkhead portion disposed in the mid body, the bulkhead portion being configured to partition the interior of the mid body into an inflow space into which first gas is introduced and an outflow space from which the first gas is discharged, and a bypass hole formed through the bulkhead portion, the bypass hole being configured to allow a part of the first gas introduced into the inflow space to bypass the cartridge therethrough and to flow to the outflow space.

A humidifier for fuel cells according to the present disclosure may include a humidifying module configured to humidify dry gas to be supplied to a fuel cell stack using wet gas, a first cap coupled to one end of the humidifying module, and a second cap coupled to the other end of the humidifying module. The humidification module may include a mid-case having open opposite ends and at least one cartridge including a plurality of hollow fiber membranes. The mid-case may include a mid body configured to receive the cartridge, a bulkhead portion disposed in the mid body, the bulkhead portion being configured to partition the interior of the mid body into an inflow space into which first gas is introduced and an outflow space from which the first gas is discharged, and a bypass hole formed through the bulkhead portion, the bypass hole being configured to allow a part of the first gas introduced into the inflow space to bypass the cartridge therethrough and to flow to the outflow space.

### [Advantageous Effects]

The present disclosure is implemented such that a part of first gas introduced into an inflow space bypasses a cartridge through a bypass hole and flows to an outflow space. Accordingly, the present disclosure is capable of reducing shell differential pressure using the bypass hole, thereby contributing to improvement in efficiency of a fuel cell system.

The present disclosure is capable of preventing an excessive increase in the shell differential pressure using the bypass hole even if the size of a mid-case is reduced. Consequently, the present disclosure is capable of achieving versatile application to various fields, such as hydrogen electric vehicles, through miniaturization.

### [Description of Drawings]

FIG. 1 is a schematic exploded perspective view of a conventional humidifier for fuel cells.
FIG. 2 is a schematic exploded perspective view of a humidifier for fuel cells according to the present disclosure.
FIG. 3 is a schematic exploded sectional view showing the humidifier for fuel cells according to the present disclosure, taken along line I-I of FIG. 2.
FIG. 4 is a schematic coupled sectional view showing the humidifier for fuel cells according to the present disclosure, taken along line I-I of FIG. 2.
FIGs. 5 and 6 are schematic plan views of a cartridge of the humidifier for fuel cells according to the present disclosure.
FIG. 7 is a schematic side sectional view showing that an inflow space and an outflow space are partitioned by a bulkhead portion in a mid-case of the humidifier for fuel cells according to the present disclosure.
FIG. 8 is a schematic sectional view taken along line II-II of FIG. 7.
FIG. 9 is a schematic side sectional view showing that a bypass hole is formed in the bulkhead portion in the mid-case of the humidifier for fuel cells according to the present disclosure.
FIG. 10 is a schematic sectional view of a mid-case of a humidifier for fuel cells according to a modification of the present disclosure, taken along line II-II of FIG. 7.
FIG. 11 is experimental results of measurement of humidification efficiency and shell differential pressure by changing only the sectional area of the bypass hole while not changing the sectional area of an inner partition surface.

### [Best Mode]

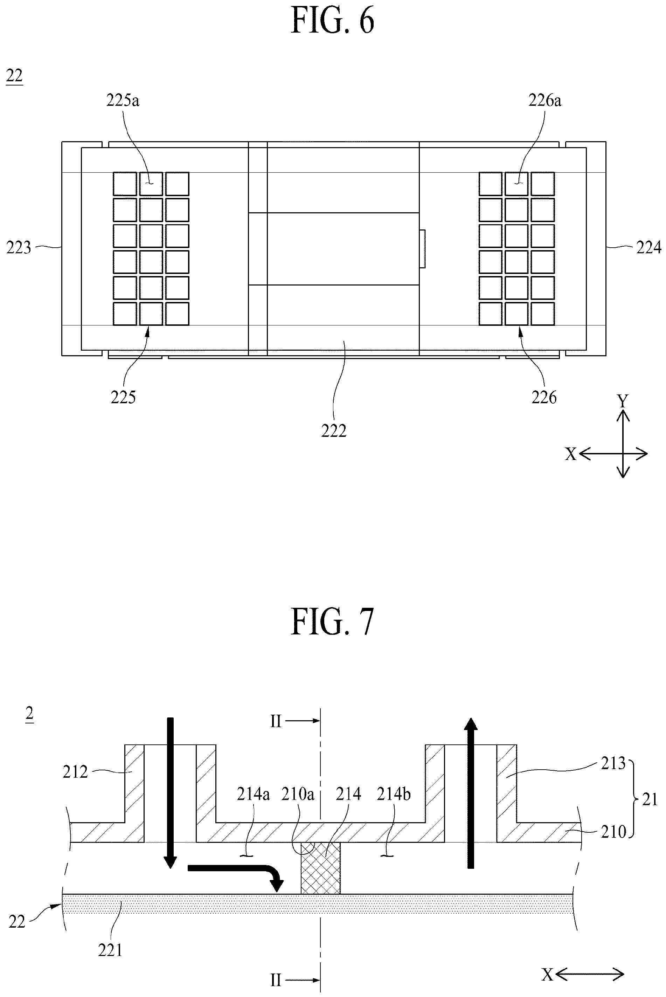

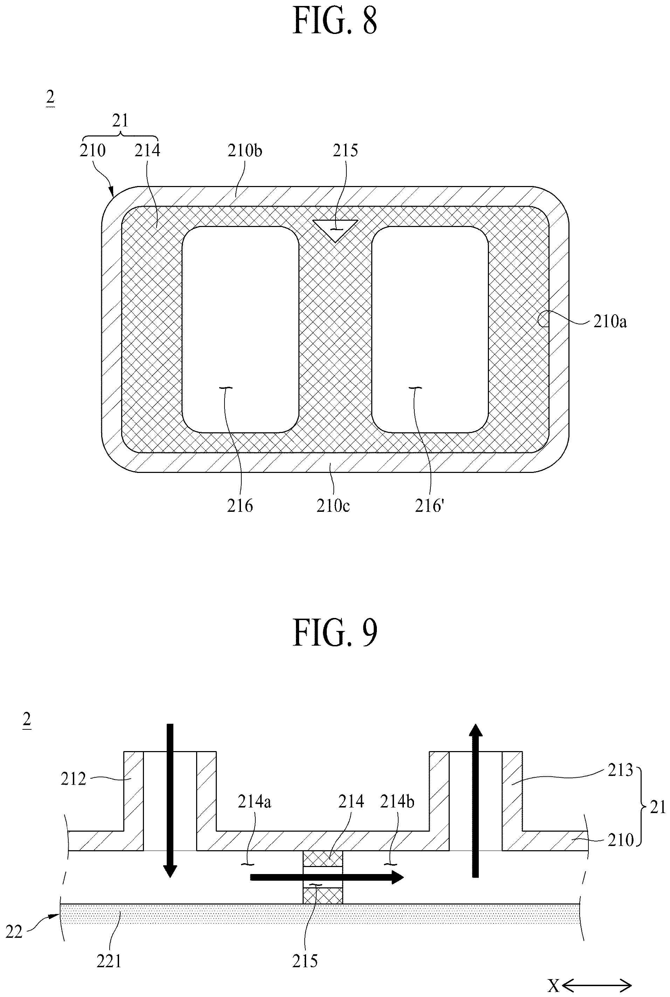

Hereinafter, an embodiment of a humidifier for fuel cells according to the present disclosure will be described in detail with reference to the accompanying drawings. A mid-case of a humidifier for fuel cells according to the present disclosure may be included in a humidifier for fuel cells according to the present disclosure, and therefore the cartridge of the humidifier for fuel cells according to the present disclosure will also be described while the humidifier for fuel cells according to the present disclosure is described. Meanwhile, in FIGs. 7 and 9, hollow fiber membranes are simply shown by hatching and an inner case is omitted.

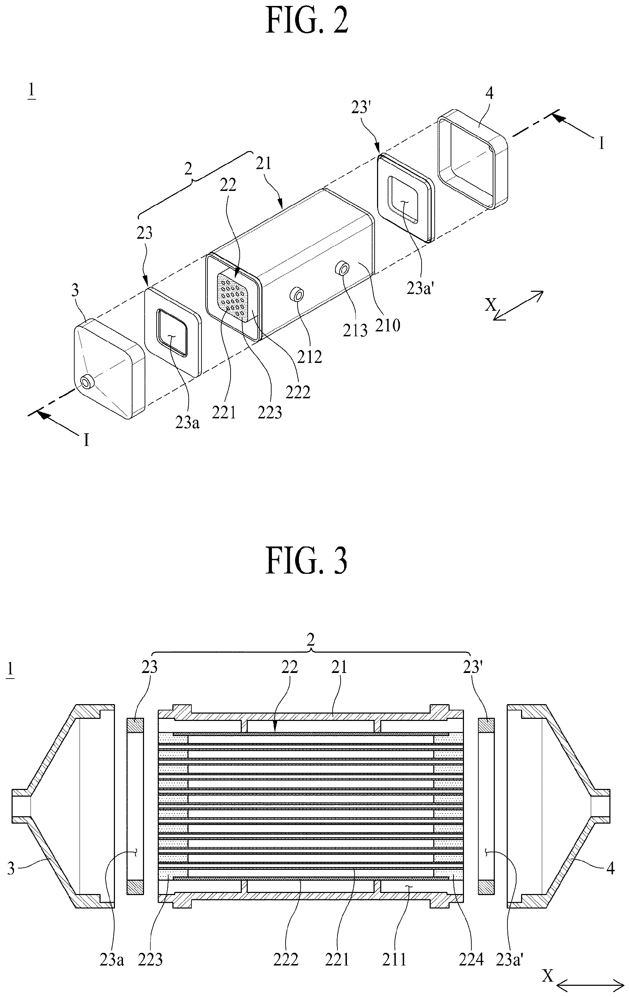

Referring to FIGs. 2 to 4, a humidifier 1 for fuel cells according to the present disclosure is configured to humidify dry gas to be supplied to a fuel cell stack (not shown) using wet gas. The wet gas may be discharged from the fuel cell stack. The dry gas may be fuel gas or air. The dry gas may be humidified by the wet gas, and may be supplied to the fuel cell stack. The humidifier 1 for fuel cells according to the present disclosure includes a humidifying module 2 configured to humidify dry gas, a first cap 3 coupled to one end of the humidifying module 2, and a second cap 4 coupled to the other end of the humidifying module 2.

Referring to FIGs. 2 to 4, the humidifying module 2 humidifies dry gas. The first cap 3 may be coupled to one end of the humidifying module 2. The second cap 4 may be coupled to the other end of the humidifying module 2. The humidifying module 2 may supply humidified dry gas to the fuel cell stack using first gas and second gas. When the first gas is dry gas, the second gas may be wet gas. In this case, the first gas may be humidified by the second gas and may then be supplied to the fuel cell stack. When the first gas is wet gas, the second gas may be dry gas. In this case, the second gas may be humidified by the first gas and may then be supplied to the fuel cell stack.

The humidifying module 2 includes a mid-case 21 and at least one cartridge 22.

The cartridge 22 is coupled to the mid-case 21. The cartridge 22 may be disposed in the mid-case 21. Opposite ends of the mid-case 21 are open. In this case, a receiving hole 211 may be formed in the mid-case 21. The receiving hole 211 may be formed so as to extend through the mid-case 21 in a first axis direction (X-axis direction). At least one cartridge 22 may be disposed in the receiving hole 211.

The mid-case 21 may include a mid body 210. The cartridge 22 is received in the mid body 210. The cartridge 22 may be disposed in the mid body 210 so as to be received in the mid body 210. At least one cartridge 22 may be received in the mid body 210. The receiving hole 211 may be formed through the mid body 210 in the first axis direction (X-axis direction).

A first gas inlet 212 and a first gas outlet 213 may be formed in the mid-case 21. The first gas inlet 212 may introduce the first gas into the mid body 210. The first gas outlet 213 may discharge the first gas from the mid body 210. Each of the first gas outlet 213 and the first gas inlet 212 may protrude from the mid body 210.

The cartridge 22 is disposed in the mid-case 21. The cartridge 22 includes a plurality of hollow fiber membranes 221. The hollow fiber membranes 221 may be coupled to the cartridge 22 so as to be modularized. Consequently, the hollow fiber membranes 221 may be installed in the mid-case 21 through a process of coupling the cartridge 22 to the mid-case 21. In the humidifier 1 for fuel cells according to the present disclosure, therefore, ease in installation, separation, and replacement of the hollow fiber membranes 221 may be improved.

The cartridge 22 may include an inner case 222.

The inner case 222 has openings formed at opposite ends, and receives the hollow fiber membranes 221. The hollow fiber membranes 221 may be disposed in the inner case 222 so as to be modularized. Each of the hollow fiber membranes 221 may include a polymer membrane made of polysulfone resin, polyethersulfone resin, sulfonated polysulfone resin, polyvinylidene fluoride (PVDF) resin, polyacrylonitrile (PAN) resin, polyimide resin, polyamide imide resin, polyester imide resin, or a mixture of two or more thereof.

The cartridge 22 may include a first fixing layer 223. The first fixing layer 223 is configured to fix one end of each of the hollow fiber membranes 221. The first fixing layer 223 may close the opening formed in one end of the inner case 222. In this case, the first fixing layer 223 may be formed so as not to block hollows of the hollow fiber membranes 221. The first fixing layer 223 may be formed by hardening a liquid resin, such as liquid polyurethane resin, through a casting process. A part of the first fixing layer 223 may be located in the inner case 222, and the remaining part of the first fixing layer may protrude outward from the inner case 222. The first fixing layer 223 may fix one end of each of the hollow fiber membranes 221 to the inner case 222.

The cartridge 22 may include a second fixing layer 224. The second fixing layer 224 is configured to fix the other end of each of the hollow fiber membranes 221. The second fixing layer 224 may close the opening formed in the other end of the inner case 222. In this case, the second fixing layer 224 may be formed so as not to block the hollows of the hollow fiber membranes 221. The second fixing layer 224 may be formed by hardening a liquid resin, such as liquid polyurethane resin, through a casting process. A part of the second fixing layer 224 may be located in the inner case 222, and the remaining part of the second fixing layer may protrude outward from the inner case 222. The second fixing layer 224 may fix the other end of each of the hollow fiber membranes 221 to the inner case 222. Since the second fixed layer 224 and the first fixed layer 223 are formed so as not to block the hollows of the hollow fiber membranes 221, the second gas may be supplied to the hollows of the hollow fiber membranes 221 without obstruction by the second fixed layer 224 and the first fixed layer 223, and may be discharged from the hollows of the hollow fiber membranes 221 without obstruction by the second fixed layer 224 and the first fixed layer 223.

Referring to FIGs. 2 to 6, the cartridge 22 may include a second gas inlet 225 and a second gas outlet 226.

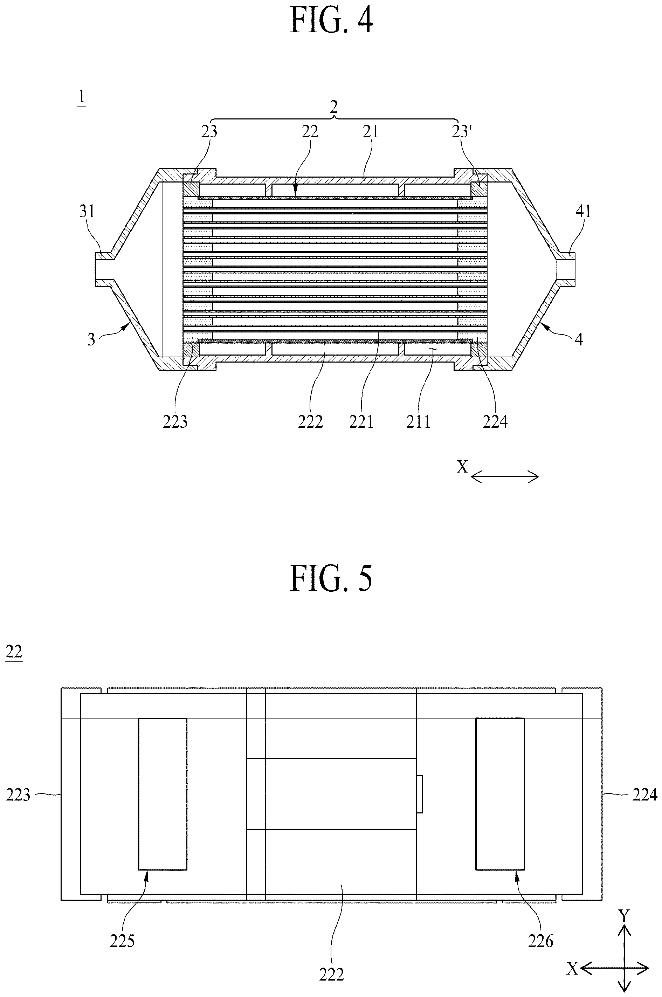

The second gas inlet 225 is formed at the inner case 222. The second gas inlet 225 may be formed at one side of the inner case 222. One side of the inner case 222 may be disposed so as to face any one of the side walls of the mid body 210. The second gas inlet 225 may introduce the first gas into the inner case 222. The second gas inlet 225 may be formed through the inner case 222. As shown in FIG. 5, the second gas inlet 225 may be implemented by one through-hole formed through the inner case 222. As shown in FIG. 6, the second gas inlet 225 may be implemented by a plurality of through-holes formed through the inner case 222. In this case, the second gas inlet 225 may include a plurality of inflow windows 225a formed through different parts of the inner case 222. The inflow windows 225a may be disposed spaced apart from each other in the first axis direction (X-axis direction) and a second axis direction (Y-axis direction) so as to form a matrix. The second axis direction (Y-axis direction) is an axial direction perpendicular to the first axis direction (X-axis direction).

The second gas outlet 226 is formed at the inner case 222. The second gas outlet 226 may be formed at one side of the inner case 222. The second gas outlet 226 may discharge the first gas from the inner case 222. The second gas outlet 226 may be formed through the inner case 222. As shown in FIG. 5, the second gas outlet 226 may be implemented by one through-hole formed through the inner case 222. As shown in FIG. 6, the second gas outlet 226 may be implemented by a plurality of through-holes formed through the inner case 222. In this case, the second gas outlet 226 may include a plurality of outflow windows 226a formed through different parts of the inner case 222. The outflow windows 226a may be disposed spaced apart from each other in the first axis direction (X-axis direction) and the second axis direction (Y-axis direction) so as to form a matrix. The second gas outlet 226 and the second gas inlet 225 may be disposed spaced apart from each other in the first axis direction (X-axis direction).

When the first gas is wet gas, the first gas may be supplied to a space between an inner surface of the mid-case 21 and an outer surface of the cartridge 22 through the first gas inlet 212, may be supplied into the cartridge 22 through the second gas inlet 225, and may come into contact with outer surfaces of the hollow fiber membranes 221. During this process, moisture contained in the first gas may be transmitted through the hollow fiber membranes 221 to humidify second gas flowing along the hollows of the hollow fiber membranes 221. The humidified second gas may be discharged from the hollow fiber membranes 221, and may then be supplied to the fuel cell stack through the first cap 3 or the second cap 4. After humidifying the second gas, the first gas may be discharged to the space between the outer surface of the cartridge 22 and the inner surface of the mid-case 21 through the second gas outlet 226, and may be discharged from the mid-case 21 through the first gas outlet 213. In this case, the first gas may be off-gas discharged from the fuel cell stack.

When the first gas is dry gas, the first gas may be supplied to the space between the inner surface of the mid-case 21 and the outer surface of the cartridge 22 through the first gas inlet 212, may be supplied into the cartridge 22 through the second gas inlet 225, and may come into contact with the outer surfaces of the hollow fiber membranes 221. During this process, moisture contained in the second gas flowing along the hollows of the hollow fiber membranes 221 may be transmitted through the hollow fiber membranes 221 to humidify the first gas introduced into the cartridge 22. The humidified first gas may be discharged to the space between the outer surface of the cartridge 22 and the inner surface of the mid-case 21 through the second gas outlet 226, may be discharged from the mid-case 21 through the first gas outlet 213, and may be supplied to the fuel cell stack. After humidifying the first gas, the second gas may be discharged from the hollow fiber membranes 221, and may then be discharged to the outside through the first cap 3 or the second cap 4. In this case, the second gas may be off-gas discharged from the fuel cell stack.

The humidifying module 2 may include a plurality of packing members 23 and 23'.

The packing members 23 and 23' form a hermetic seal between the cartridge 22 and the mid-case 21 in order to prevent direct mixing between the first gas and the second gas. The packing members 23 and 23' may be inserted between the cartridge 22 and the mid-case 21. In this case, the cartridge 22 may be inserted through first through-holes 23a and 23a' formed respectively in the packing members 23 and 23'. The packing members 23 and 23' may be disposed respectively at opposite ends of the cartridge 22. Although not shown, resin layers may be formed respectively at the opposite ends of the cartridge 22 instead of the packing members 23 and 23'. Each of the resin layers may be formed by hardening a liquid polymer, such as liquid polyurethane resin, using a casting method.

Referring to FIGs. 2 to 4, the first cap 3 is coupled to one end of the humidifying module 2. A space between the first cap 3 and the cartridge 22 may be isolated from the space between the cartridge 22 and the mid-case 21 in a hermetically sealed state by the packing member 23 or the resin layer. The first cap 3 may include a first port 31. The first port 31 is configured to allow the second gas to flow therethrough. The first port 31 may communicate with the hollow fiber membranes 221. In the process of the second gas flowing between the first cap 3 and the hollow fiber membranes 221, therefore, the second gas may be introduced or discharged through the first port 31.

Referring to FIGs. 2 to 4, the second cap 4 is coupled to the other end of the humidifying module 2. The second cap 4 may be coupled to the other end of the humidifying module 2 so as to be spaced apart from the first cap 3 in the first axis direction (X-axis direction). A space between the second cap 4 and the cartridge 22 may be isolated from the space between the cartridge 22 and the mid-case 21 in a hermetically sealed state by the packing member 23' or the resin layer. The second cap 4 may include a second port 41. The second port 41 is configured to allow the second gas to flow therethrough. The second port 41 may communicate with the hollow fiber membranes 221. In the process of the second gas flowing between the second cap 4 and the hollow fiber membranes 221, therefore, the second gas may be introduced or discharged through the second port 41. When the second gas is introduced through the second port 41, the second gas may be discharged through the first port 31. In this case, the second gas may exchange moisture with the first gas while sequentially passing through the second cap 4, the hollows of the hollow fiber membranes 221, and the first cap 3. When the second gas is discharged through the second port 41, the second gas may be introduced through the first port 31. In this case, the second gas may exchange moisture with the first gas while sequentially passing through the first cap 3, the hollows of the hollow fiber membranes 221, and the second cap 4.

Here, the humidifier 1 for fuel cells according to the present disclosure may be implemented to prevent an excessive increase in shell differential pressure corresponding to the internal pressure of the mid-case 21 while the first gas is introduced into the mid-case 111 through the first gas inlet 212 and is then discharged from the mid-case 111 through the first gas outlet 213. To this end, the mid-case 21 may be implemented as follows.

Referring to FIGs. 2 to 8, the mid-case 21 may include a bulkhead portion 214.

The bulkhead portion 214 may be disposed in the mid body 210. The bulkhead portion 214 may partition the interior of the mid body 210 into an inflow space 214a and an outflow space 214b. The inflow space 214a is a space into which the first gas is introduced, and may communicate with the first gas inlet 212. In the first axis direction (X-axis direction), the inflow space 214a may be disposed between the packing member 23 and the bulkhead portion 214. The outflow space 214b is a space from which the first gas is discharged, and may communicate with the first gas outlet 213. In the first axis direction (X-axis direction), the outflow space 214b may be disposed between the bulkhead portion 214 and the packing member 23'. The bulkhead portion 214 may be disposed between the inflow space 214a and the outflow space 214b to block the first gas introduced into the inflow space 214a through the first gas inlet 212 from flowing directly to the outflow space 214b without passing through the interior of the cartridge 22. Accordingly, the humidifier 1 for fuel cells according to the present disclosure may improve humidification efficiency by increasing the flow rate of the first gas introduced into the cartridge 22.

The bulkhead portion 214 may be coupled to the mid body 210 so as to block an inner partition surface 210a of the mid body 210. The inner partition surface 210a may correspond to an inner surface of the mid body 210 in which the bulkhead portion 214 is disposed. The inner partition surface 210a and the bulkhead portion 214 may be disposed between the first gas inlet 212 and the first gas outlet 213 in the first axis direction (X-axis direction). In the first axis direction (X-axis direction), the inner partition surface 210a and the bulkhead portion 214 may be disposed at the point equidistantly spaced from each of the first gas inlet 212 and the first gas outlet 213. The bulkhead portion 214 and the mid body 210 may be integrally formed. In this case, the bulkhead portion 214 may be formed so as to protrude from the inner partition surface 210a toward the interior of the mid body 210.

Referring to FIGs. 2 to 9, the mid-case 21 may include a bypass hole 215.

The bypass hole 215 may be formed through the bulkhead portion 214. A part of the first gas introduced into the inflow space 214a may bypass the cartridge 22 through the bypass hole 215 and may flow to the outflow space 214b. That is, a part of the first gas may flow directly from the inflow space 214a to the outflow space 214b without passing through the interior of the cartridge 22. Accordingly, the humidifier 1 for fuel cells according to the present disclosure may achieve the following effects.

First, in the absence of the bypass hole 215, all of the first gas introduced into the inflow space 214a may flow to the outflow space 214b only after passing through the interior of the cartridge 22. Accordingly, when the flow rate of the first gas residing in the mid-case 21 increases, such as when the flow rate of the first gas introduced into the inflow space 214a increases or the flow rate of the first gas discharged from the outflow space 214b decreases, shell differential pressure increases. An increase in the shell differential pressure may cause a decrease in the efficiency of a fuel cell system, such as an increase in power consumption. In addition, the decrease in the efficiency of the fuel cell system due to the increase in the shell differential pressure becomes more severe as the mid-case 21 is miniaturized. Therefore, in the absence of the bypass hole 215, it is difficult to reduce the overall size.

Next, in the presence of the bypass hole 215, a part of the first gas introduced into the inflow space 214a may bypass the cartridge 22 through the bypass hole 215 and may flow to the outflow space 214b. That is, a part of the first gas may flow directly from the inflow space 214a to the outflow space 214b through the bypass hole 215 without passing through the interior of the cartridge 22. Accordingly, the humidifier 1 for fuel cells according to the present disclosure may reduce the shell differential pressure using the bypass hole 215, thereby contributing to improvement in the efficiency of the fuel cell system. In addition, the humidifier 1 for fuel cells according to the present disclosure may prevent an excessive increase in the shell differential pressure using the bypass hole 215 even if the size of the mid-case 21 is reduced, thereby achieving versatile application to various fields, such as hydrogen electric vehicles, through miniaturization.

The bypass hole 215 may allow a part of the first gas introduced into the inflow space 214a through the first gas inlet 212 to flow to the outflow space 214b therethrough. The first gas introduced into the outflow space 214b through the bypass hole 215 may be discharged to the outside of the mid-case 21 through the first gas outlet 213. While FIG. 8 shows the bypass hole 215 as being formed in a shape having a triangular section, the present disclosure is not limited thereto, and the bypass hole 215 may be formed in various shapes, such as a shape having a polygonal section, e.g., a quadrangular section, or a shape having a circular section, as long as the first gas can flow from the inflow space 214a to the outflow space 214b.

Referring to FIGs. 2 to 10, the bypass hole 215 may be formed through the bulkhead portion 214 so as to be disposed between an upper surface 210b of the mid body 210 and a lower surface 210c of the mid body 210. At least one of the first gas inlet 212 and the first gas outlet 213 may be disposed in the upper surface 210b of the mid body 210. The lower surface 210c of the mid body 210 may be disposed opposite the upper surface 210b of the mid body 210. The lower surface 210c of the mid body 210 may be disposed in a direction in which gravity acts.

As shown in FIG. 9, the bypass hole 215 may be disposed at the position where the distance from the upper surface 210b of the mid body 210 is less than the distance from the lower surface 210c of the mid body 210.

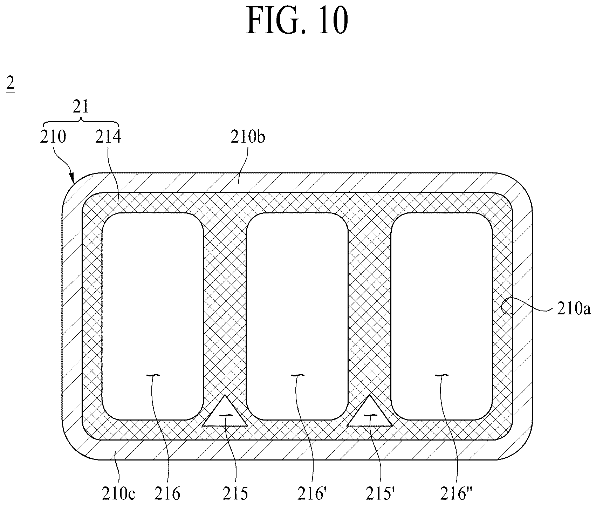

As shown in FIG. 10, the bypass hole 215 may be disposed at the position where the distance from the lower surface 210c of the mid body 210 is less than the distance from the upper surface 210b of the mid body 210. In this case, the bypass hole 215 may discharge condensate present on the lower surface 210c of the mid body 210 to the outflow space 214b. The condensate may be generated by moisture exchange between the first gas and the second gas and may be collected on the lower surface 210c of the mid body 210 by gravity. Since an increase in the flow rate at which the condensate is supplied to the fuel cell stack may reduce the efficiency of the fuel cell system due to a flooding phenomenon, the humidifier 1 for fuel cells according to the present disclosure is implemented to discharge the condensate to the outflow space 214b using the bypass hole 215 and then to discharge the same to the outside of the mid-case 21 through the first gas outlet 213. Consequently, the humidifier 1 for fuel cells according to the present disclosure may contribute to improvement in the efficiency of the fuel cell system through the discharge of condensate using the bypass hole 215.

Referring to FIGs. 2 to 11, the sectional area of the bypass hole 215 may be determined depending on the sectional area of the inner partition surface 210a. In this case, the sectional area may correspond to the area of a section in an axial direction perpendicular to the direction in which the inflow space 214a and the outflow space 214b are spaced apart from each other. The direction in which the inflow space 214a and the outflow space 214b are spaced apart from each other may be parallel to the first axis direction (X-axis direction). The sectional area may be the area of a section in the second axis direction (Y-axis direction). Assuming that the sectional area of the inner partition surface 210a is 1, the sectional area of the bypass hole 215 may be implemented to be 0.005 to 0.1. That is, the ratio of the sectional area of the bypass hole 215 to the sectional area of the inner partition surface 210a may be 0.5% to 10%. Accordingly, the humidifier 1 for fuel cells according to the present disclosure may be implemented to have humidification efficiency and shell differential pressure within a predetermined range, thereby contributing to improvement in the efficiency of the fuel cell system.

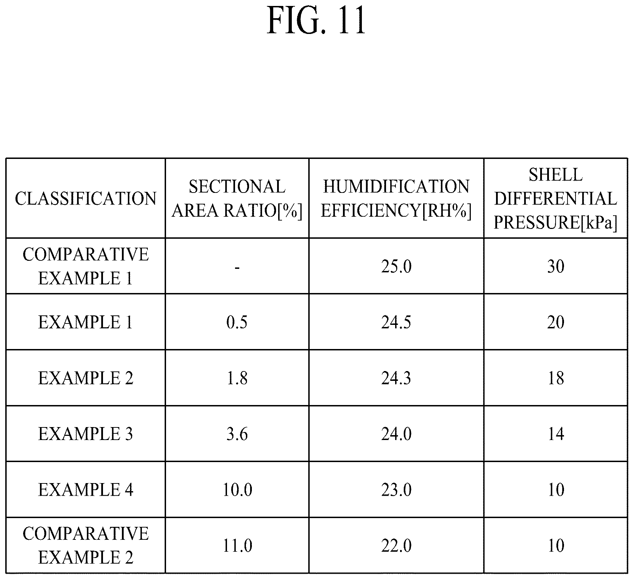

It can be seen from the experimental results of FIG. 11 that, when the ratio of the sectional area of the bypass hole 215 to the sectional area of the inner partition surface 210a is 0.5% to 10%, the humidifier is implemented to have humidification efficiency and shell differential pressure within the predetermined range. FIG. 11 is experimental results of measurement of humidification efficiency and shell differential pressure by changing only the sectional area of the bypass hole 215 while not changing the sectional area of the inner partition surface 210a. In FIG. 11, the sectional area ratio refers to the ratio of the sectional area of the bypass hole 215 to the sectional area of the inner partition surface 210a.

As can be seen from FIG. 11, Example 1 is implemented such that the ratio of the sectional area of the bypass hole 215 to the sectional area of the inner partition surface 210a is 0.5%, whereby the humidification efficiency is 25.0 RH% and the shell differential pressure is 20 kPa. Example 2 is implemented such that the ratio of the sectional area of the bypass hole 215 to the sectional area of the inner partition surface 210a is 1.8%, whereby the humidification efficiency is 24.3 RH% and the shell differential pressure is 18 kPa. Example 3 is implemented such that the ratio of the sectional area of the bypass hole 215 to the sectional area of the inner partition surface 210a is 3.6%, whereby the humidification efficiency is 24.0 RH% and the shell differential pressure is 14 kPa. Example 4 is implemented such that the ratio of the sectional area of the bypass hole 215 to the sectional area of the inner partition surface 210a is 10.0%, whereby the humidification efficiency is 23.0 RH% and the shell differential pressure is 10 kPa. As such, it can be seen that Example 1 to Example 4 are implemented such that the ratio of the sectional area of the bypass hole 215 to the sectional area of the inner partition surface 210a is 0.5% to 10%, whereby the humidification efficiency is 23 to 24.5 RH% and the shell differential pressure is 10 to 20 kPa.

In contrast, Comparative Example 1 does not have the bypass hole 215, which results in a humidification efficiency of 25.0 RH% and a shell differential pressure of 30 kPa, which is significantly high. It can be seen that, in Comparative Example 1, the shell differential pressure is significantly increased even though there is no significant difference in the humidification efficiency when compared to Example 1 implemented such that the ratio of the sectional area of the bypass hole 215 to the sectional area of the inner partition surface 210a is 0.5%. It can be seen therefrom that Comparative Example 1 reduces the efficiency of the fuel cell system when compared to Example 1.

In addition, Comparative Example 2 is implemented such that the ratio of the sectional area of the bypass hole 215 to the sectional area of the inner partition surface 210a is 11.0%, whereby the humidification efficiency is 22.0 RH% and the shell differential pressure is 10 kPa. It can be seen that, in Comparative Example 2, the humidification efficiency is reduced by 1.0 RH% even though there is no difference in the shell differential pressure when compared to Example 4 implemented such that the ratio of the sectional area of the bypass hole 215 to the sectional area of the inner partition surface 210a is 10.0%. It can be seen therefrom that Comparative Example 2 reduces only the humidification efficiency when compared to Example 4, thereby reducing the performance of the fuel cell system.

As such, it can be seen that the humidifier 1 for fuel cells according to the present disclosure is implemented such that the ratio of the sectional area of the bypass hole 215 to the sectional area of the inner partition surface 210a is 0.5% to 10%, the humidification efficiency is 23 to 24.5 RH% and the shell differential pressure is 10 to 20 kPa. Consequently, the humidifier 1 for fuel cells according to the present disclosure may not only improve the performance of the fuel cell system by smoothly supplying humidified gas to the fuel cell stack, but may also contribute to improvement in the efficiency of the fuel cell system through a reduction of the shell differential pressure.

Assuming that the sectional area of the inner partition surface 210a is 1, the sectional area of the bypass hole 215 may be implemented to be 0.005 to 0.06. That is, the ratio of the sectional area of the bypass hole 215 to the sectional area of the inner partition surface 210a may be 0.5% to 6%. Assuming that the sectional area of the inner partition surface 210a is 1, the sectional area of the bypass hole 215 may be implemented to be 0.005 to 0.04. That is, the ratio of the sectional area of the bypass hole 215 with respect to the sectional area of the inner partition surface 210a may be 0.5% to 4%.

A plurality of bypass holes 215 may be formed in the bulkhead portion 214. The bypass holes 215 and 215' may be formed through the bulkhead portion 214 at positions spaced apart from each other. Accordingly, the humidifier 1 for fuel cells according to the present disclosure is implemented to bypass the first gas at different positions of the bulkhead portion 214. In this case, assuming that the sectional area of the inner partition surface 210a is 1, the sum of the sectional areas of the bypass holes 215 and 215' may be implemented to be 0.005 to 0.1. That is, the ratio of the sum of the sectional areas of the bypass holes 215 and 215' to the sectional area of the inner partition surface 210a may be 0.5% to 10%.

Although FIG. 10 shows that the bypass holes 215 and 215' are disposed at positions where the distance from the lower surface 210c of the mid body 210 is less than the distance from the upper surface 210b of the mid body 210, the present disclosure is not limited thereto, and the bypass holes 215 and 215' may be disposed at positions where the distance from the upper surface 210b of the mid body 210 is less than the distance from the lower surface 210c of the mid body 210. Some of the bypass holes 215 and 215' may be disposed at a position closer to the lower surface 210c of the mid body 210, and some of the bypass holes 215 and 215' may be disposed at a position closer to the upper surface 210b of the mid body 210. In addition, while FIG. 10 shows two bypass holes 215 and 215' formed in the bulkhead portion 214, the present disclosure is not limited thereto, and three or more bypass holes 215 may be formed in the bulkhead portion 214.

Referring to FIGs. 2 to 10, the mid-case 21 may include an insertion hole 216.

The insertion hole 216 may be formed through the bulkhead portion 214. The cartridge 22 may be inserted into the insertion hole 216. The bulkhead portion 214 may support the cartridge 22 inserted in the insertion hole 216, thereby coupling the cartridge 22 to the mid body 210. The cartridge 22 may be inserted into the insertion hole 216 by interference fit. The insertion hole 216 and the bypass hole 215 may be formed through the bulkhead portion 214 at positions spaced apart from each other.

The mid-case 21 may include a plurality of insertion holes 216. The insertion holes 216, 216', and 216" may be formed through the bulkhead portion 214 at positions spaced apart from each other. Accordingly, the humidifier 1 for fuel cells according to the present disclosure is implemented such that a plurality of cartridges 22 can be received in the mid-case 21. Two insertion holes 216, 216' are shown as being formed in the bulkhead portion 214 in FIG. 8, and three insertion holes 216, 216', and 216" are shown as being formed in the bulkhead portion 214 in FIG. 10; however, the present disclosure is not limited thereto, and four or more insertion holes 216 may be formed in the bulkhead portion 214.

The present disclosure described above is not limited to the above embodiments and the accompanying drawings, and it will be obvious to a person having ordinary skill in the art to which the present disclosure pertains that various substitutions, modifications, and alterations are possible without departing from the technical idea of the present disclosure.

## Claims

1. A mid-case provided in a humidifier for fuel cells, the humidifier comprising a humidifying module configured to humidify dry gas to be supplied to a fuel cell stack using wet gas, a first cap coupled to one end of the humidifying module, and a second cap coupled to the other end of the humidifying module, the mid-case comprising:
a mid body configured to receive at least one cartridge comprising a plurality of hollow fiber membranes;
a bulkhead portion disposed in the mid body, the bulkhead portion being configured to partition an interior of the mid body into an inflow space into which first gas is introduced and an outflow space from which the first gas is discharged; and
a bypass hole formed through the bulkhead portion, the bypass hole being configured to allow a part of the first gas introduced into the inflow space to bypass the cartridge therethrough and to flow to the outflow space.

2. The mid-case according to claim 1, wherein
the mid-case comprises an insertion hole formed through the bulkhead portion,
the cartridge is inserted into the insertion hole, and
the bypass hole and the insertion hole are formed through the bulkhead portion at positions spaced apart from each other.

3. The mid-case according to claim 1, wherein
the bulkhead portion is coupled to the mid body so as to block an inner partition surface of the mid body, and
assuming that a sectional area of the inner partition surface is 1, a sectional area of the bypass hole is 0.005 to 0.1.

4. The mid-case according to claim 1, wherein
the bypass hole is formed in the bulkhead portion in plural, and
the bypass holes are formed through the bulkhead portion at positions spaced apart from each other.

5. The mid-case according to claim 4, wherein
the bulkhead portion is coupled to the mid body so as to block an inner partition surface of the mid body, and
assuming that a sectional area of the inner partition surface is 1, a sum of sectional areas of the bypass holes is 0.005 to 0.1.

6. The mid-case according to claim 1, wherein
the mid-case comprises a first gas inlet configured to introduce the first gas into the inflow space and a first gas outlet configured to discharge the first gas from the outflow space, and
the bypass hole allows a part of the first gas introduced into the inflow space through the first gas inlet to flow toward the outflow space therethrough.

7. The mid-case according to claim 1, wherein the bypass hole is disposed at a position where a distance from a lower surface of the mid body is less than a distance from an upper surface of the mid body to discharge condensate present on the lower surface of the mid body to the outflow space.

8. A humidifier for fuel cells, the humidifier comprising:
a humidifying module configured to humidify dry gas to be supplied to a fuel cell stack using wet gas;
a first cap coupled to one end of the humidifying module; and
a second cap coupled to the other end of the humidifying module, wherein
the humidification module comprises a mid-case having open opposite ends and at least one cartridge comprising a plurality of hollow fiber membranes,
the mid-case comprises:
a mid body configured to receive the cartridge;
a bulkhead portion disposed in the mid body, the bulkhead portion being configured to partition an interior of the mid body into an inflow space into which first gas is introduced and an outflow space from which the first gas is discharged; and
a bypass hole formed through the bulkhead portion, the bypass hole being configured to allow a part of the first gas introduced into the inflow space to bypass the cartridge therethrough and to flow to the outflow space.

9. The humidifier according to claim 8, wherein
the mid-case comprises an insertion hole formed through the bulkhead portion,
the cartridge is inserted into the insertion hole, and
the bypass hole and the insertion hole are formed through the bulkhead portion at positions spaced apart from each other.

10. The humidifier according to claim 8, wherein
the bulkhead portion is coupled to the mid body so as to block an inner partition surface of the mid body, and
assuming that a sectional area of the inner partition surface is 1, a sectional area of the bypass hole is 0.005 to 0.1.

11. The humidifier according to claim 8, wherein
the bypass hole is formed in the bulkhead portion in plural, and
the bypass holes are formed through the bulkhead portion at positions spaced apart from each other.

12. The humidifier according to claim 11, wherein
the bulkhead portion is coupled to the mid body so as to block an inner partition surface of the mid body, and
assuming that a sectional area of the inner partition surface is 1, a sum of sectional areas of the bypass holes is 0.005 to 0.1.

13. The humidifier according to claim 8, wherein
the mid-case comprises a first gas inlet configured to introduce the first gas into the inflow space and a first gas outlet configured to discharge the first gas from the outflow space, and
the bypass hole allows a part of the first gas introduced into the inflow space through the first gas inlet to flow toward the outflow space therethrough.

14. The humidifier according to claim 8, wherein the bypass hole is disposed at a position where a distance from a lower surface of the mid body is less than a distance from an upper surface of the mid body to discharge condensate present on the lower surface of the mid body to the outflow space.
